# EUROPEAN PATENT APPLICATION

(11) **EP 2 821 261 A1**
(43) Date of publication of application: **07.01.2015**
(21) Application number: 12870117.4
(22) Date of filing: 23.04.2012
(51) Int. Cl.: B60C 27/04

(54) **ANTI-SKID DEVICE FOR TIRE**

(30) Priority: 28.02.2012 JP 2012042303
(71) Applicant: Sakakibara, Kouichi, Hashima-shi, Gifu 501-6335 (JP)
(72) Inventor: Sakakibara, Kouichi, Hashima-shi, Gifu 501-6335 (JP)
(74) Representative: Kuhnen & Wacker
(86) International application number: PCT/JP2012/060883
(87) International publication number: WO 2013/128659

(57) **Abstract**

A novel anti-skid device for tires is provided which can prevent troubles, such as vibration and noise caused from connectors, and rubbing between the connectors and the tire or wheel, and which also allows further stable holding of the anti-skid device. The anti-skid device for tires (S) according to the present invention is configured of elementary units. Each elementary unit (1) has a first main body (11) comprising: a first U-shaped portion (112) that straddles sidewall parts of a tire (T); an inside front extending portion (111); and an outside rear extending portion (113), and a second main body (12) in the same form. The first main body (11) and the second main body (12) are connected with each other at the inside sidewall part side of the tire (T). The elementary unit has contact members (181, 182) each covering at least a part of a connector while being capable of contacting the sidewall part. These contact members are interposed between the connectors and the sidewall parts thereby to prevent troubles, such as vibration and noise caused from the connectors, and rubbing between the connectors and the tire or wheel.

## Description

### [Technical Field]

The present invention relates to an anti-skid device for tires (which may be simply referred to as "anti-skid device") that is attached to a tire of a vehicle, such as a car, and can prevent slip of the tire and other troubles on a winter road, such as snowy road and frozen road.

### [Background Art]

To avoid slip of tires and other troubles when a vehicle, such as a car, runs on a snowy road or frozen road, it has been performed to change the tires to studless tires or attach metal chains to the tires. However, studless tires are expensive and poor in fuel efficiency compared with summer tires. On the other hand, conventional metal chains are not easy to be attached, and particularly in the case of large-sized vehicles, attachment thereof needs considerably hard work. The present inventor has already proposed an anti-skid device for tires which can completely solve such problems in the prior art. The description relevant thereto is disclosed in Patent Literature (PTL) below etc, for example.

### [Citation List]

### [Patent Literature]

[PTL 1]
Japanese Unexamined Patent Application Publication No. 2012-16963

### [Summary of Invention]

### [Technical Problem]

PTL 1 proposes an anti-skid device in which an inside portion (vehicle side) and an outside portion (non-vehicle side) of a U-shaped member are provided with abutting members (hitting members) configured of appropriate materials, such as cylindrical rubbers, which abut sidewall parts of the tire. These abutting members allow the anti-skid device to be held stably on the tire. The anti-skid device according to PTL 1, however, may be such that steel connectors and other components for connecting the U-shaped members remain exposed toward the sidewall parts of the tire and are not specifically treated for convenience, such as by being held to the sidewall parts. When the anti-skid device is attached to a tire of a vehicle and the vehicle is driven, these connectors may possibly be sources of generating vibration and noise, and/or rubbing may occur between the connectors and the sidewall parts of the tire.

The present invention has been created in view of such circumstances, and an object of the present invention is to provide a novel anti-skid device for tires which can prevent troubles, such as vibration and noise caused from connectors, and rubbing between the connectors and the tire, and which also allows further stable holding of the anti-skid device.

### [Solution to Problem]

As a result of intensive studies to solve such problems and repeating trial and error, the present inventor has conceived of providing connectors of an anti-skid device for tires with contact members in addition to conventionally-employed abutting members. Developing this achievement, the present invention has been accomplished as will be described hereinafter.

### «Anti-skid device for tires»

(1) The anti-skid device for tires (referred simply to as "anti-skid device") according to the present invention comprises two or more elementary units. Each of the two or more elementary units comprises: a first main body comprising a first U-shaped portion located from an inside sidewall part of a tire fitted therein with a wheel for vehicles to an outside sidewall part of the tire across a tread part of the tire, an inside front extending portion merging into the first U-shaped portion at the inside sidewall part side and extending in a frontward circumferential direction of the tire, and an outside rear extending portion merging into the first U-shaped portion at the outside sidewall part side and extending in a rearward circumferential direction of the tire; a first inside front connector provided pivotally at the inside front extending portion of the first main body; a first outside rear connector provided pivotally at the outside rear extending portion of the first main body; a second main body located at a frontward circumferential direction side of the first main body, the second main body comprising a second U-shaped portion located from the inside sidewall part to the outside sidewall part across the tread part, an inside rear extending portion merging into the second U-shaped portion at the inside sidewall part side and extending in a rearward circumferential direction of the tire, and an outside front extending portion merging into the second U-shaped portion at the outside sidewall part side and extending in a frontward circumferential direction of the tire; a second inside rear connector provided pivotally at the inside rear extending portion of the second main body; and a second outside front connector provided pivotally at the outside front extending portion of the second main body. The first inside front connector and the second inside rear connector are connected with each other to form each of the two or more elementary units. The anti-skid device is characterized in that each of the two or more elementary units further comprises: a first outside contact member covering at least a part of the first outside rear connector while being capable of contacting the outside sidewall part; and a second outside contact member covering at least a part of the second outside front connector while being capable of contacting the outside sidewall part.
(2) According to the anti-skid device of the present invention, each contact member can contact the sidewall part of the tire as necessary. This allows the anti-skid device of the present invention to have entirely enhanced degree of contact with the tire and to be held stably on the tire. For example, even if the rotating tire expands and contracts at sidewall parts, the contact members can follow such movements to hold the anti-skid device stably on the tire.

Moreover, if the contact members according to the present invention and conventional abutting members are used in combination, then the holding of the anti-skid device to the tire can be assigned mainly to the abutting members and subsidiarily to the contact members. In this case, the contact members act as buffers to hold more flexibly the anti-skid device according to the present invention to the tire. This allows the contact members to absorb various vibrations and impacts etc applied when the vehicle runs, so that troubles such as vibration and noise caused from the anti-skid device can be prevented when the vehicle runs, and damages etc can also be reduced from occurring in the anti-skid device itself and the tire.

The contact members according to the present invention are located at least at the side of the outside sidewall part, i.e., at the side of the decorative surface of a wheel (non-vehicle side). The contact members located in such a manner can function as flexible spacers which form a space such that the connectors and other components formed of hard metal, such as steel, do not contact the decorative surface of a wheel, and the wheel can be prevented from being damaged due to the connectors and other components.

### «Others»

(1) The "inside" as used herein refers to the side of a vehicle, whereas the "outside" refers to the opposite side thereto, i.e., the non-vehicle side, or the side of the decorative surface regarding a wheel. In addition, distinction between the "frontward" and the "rearward" is merely for descriptive purposes. As one exemplary case, the direction where the tire rotates when the vehicle runs forward means the "frontward", whereas the opposite direction thereto means the "rearward".
(2) Vehicles to which the anti-skid device according to the present invention is attached may be cars (including wagons), industrial vehicles and other vehicles as well as two-wheel vehicles and the like. In the case of two-wheel vehicles, the previously-described "inside" may be read as "right side" and the "outside" as "left side". In this case, it is preferred that the contact members are provided at both right and left sides.

### [Brief Description of Drawings]

[Fig. 1]

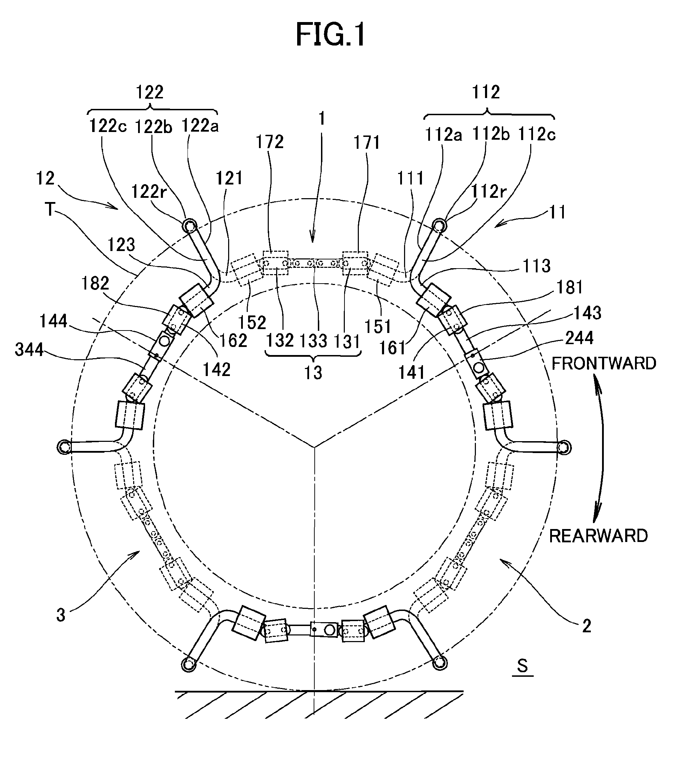

   Fig. 1 is a front elevational view illustrating an appearance that an anti-skid device for tires according to an example is attached to a tire.
[Fig. 2]

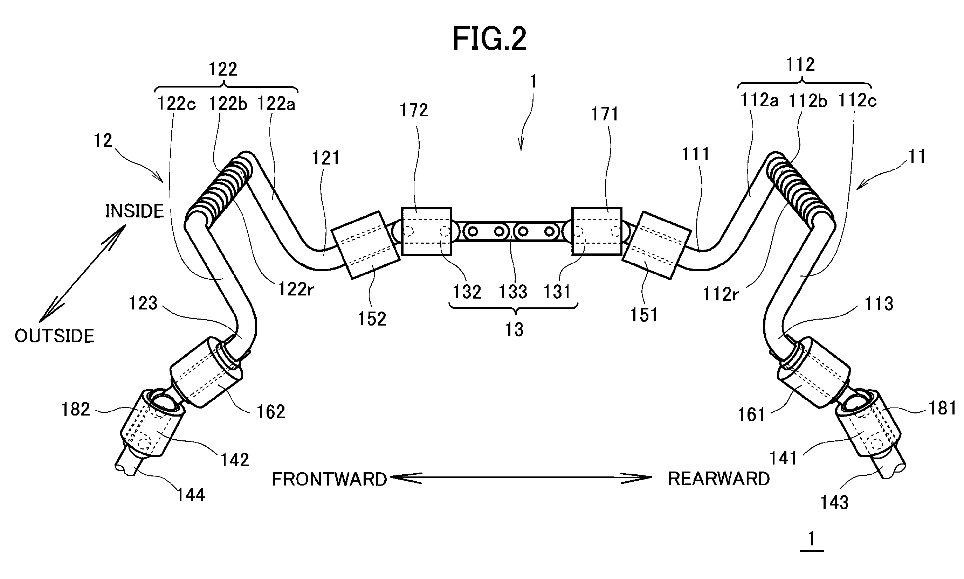

   Fig. 2 is a perspective view illustrating an elementary unit.
[Fig. 3]

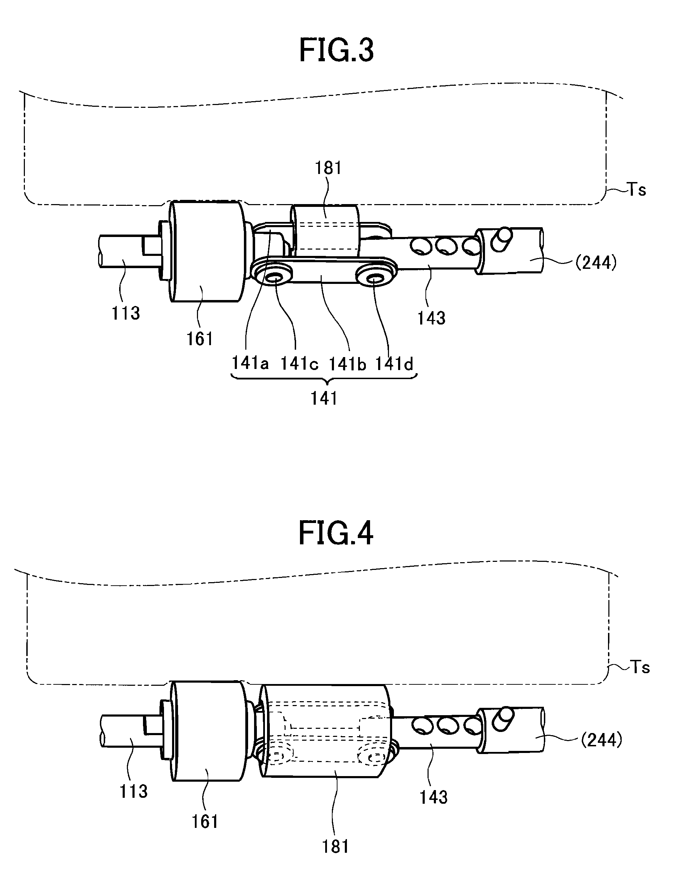

   Fig. 3 is a perspective view illustrating an appearance of a contact member attached to a connector.
[Fig. 4]
   Fig. 4 is a perspective view illustrating another example of attaching a contact member.

### [Description of Embodiments]

One or more features freely selected from the description herein may be added to the above-described features of the present invention. Which embodiment is the best or not is different in accordance with objectives, required performance and other factors.

### «Contact members»

It is preferred that the contact members according to the present invention are formed of more flexible material than those of connectors and other components because the contact members can act as buffers (cushion materials) for the connectors and other components which may be formed of hard metal. For example, the contact members may preferably be formed of elastic bodies, such as rubbers and resins.

The shape of the contact members may preferably be tubular shape in which the connector can be inserted. In this case, each contact member needs not cover the whole of each connector. It may be enough if the contact members are at least present at the side of the sidewall part of the tire. The shape of the contact members may be any of simple circular tube-like, conical tube-like, square tube-like, pyramid tube-like or other appropriate shapes. Dimensions thereof, such as the thickness and the length, may appropriately be adjusted.

It is preferred that the contact members are held to be rotatable on the connectors because in this case the contact members can be prevented from unsymmetrical wear etc. More specifically, it is preferred that the first outside contact member according to the present invention is held to be rotatable on the first outside rear connector, and the second outside contact member is held to be rotatable on the second outside front connector.

It may be enough if the contact members according to the present invention are present at the side of the decorative surface of a wheel (outside), but it is preferred that further contact members are present at the opposite surface side (inside) because in this case the stability of the anti-skid device can further be enhanced. More specifically, it is preferred that each elementary unit according to the present invention further comprises: a first inside contact member covering at least a part of the first inside front connector while being capable of contacting the inside sidewall part; and a second inside contact member covering at least a part of the second inside rear connector while being capable of contacting the inside sidewall part.

Also in this case, it is preferred that the first inside contact member according to the present invention is held to be rotatable on the first inside front connector and the second inside contact member is held to be rotatable on the second inside rear connector because this configuration allows these contact members to be prevented from unsymmetrical wear etc.

### «Abutting members»

As previously described, it is preferred that the anti-skid device according to the present invention comprises abutting members along with the above-described contact members. Therefore, the anti-skid device according to the present invention may preferably be such that the inside front extending portion of the first main body is provided with a first inside abutting member abutting the inside sidewall part, the outside rear extending portion of the first main body is provided with a first outside abutting member abutting the outside sidewall part, the inside rear extending portion of the second main body is provided with a second inside abutting member abutting the inside sidewall part, and the outside front extending portion of the second main body is provided with a second outside abutting member abutting the outside sidewall part.

### «Elementary units»

The anti-skid device according to the present invention comprises elementary units as basic units, each of which comprises a first main body, a first inside front connector and a first outside rear connector (which may be collectively referred to as "first group members"), and a second main body, a second inside rear connector and a second outside front connector (which may be collectively referred to as "second group members"). In general, two or more elementary units are used in combination. Setting aside whether or not the elementary units can easily be divided, while connectors located inside (the first inside front connectors and the second inside rear connectors) are connected with one another from the beginning, connectable and disconnectable connectors located outside (the first outside rear connectors and the second outside front connectors) may be connected with and disconnected from one another thereby to allow the anti-skid device to be attached and detached easily and rapidly.

An anti-skid device for small-sized vehicles, such as light cars, may have two elementary units connected integrally, for example, and outside connectors at one location can be connected with and disconnected from each other to thereby allow the anti-skid device to be attached and detached. In contrast, an anti-skid device for large-sized vehicles, such as industrial cars, may have three elementary units capable of being divided, and outside connectors may be connected with and disconnected from one another at three locations. An anti-skid device for typical vehicles may have two elementary units capable of being divided, and outside connectors may be connected with and disconnected from each other at two locations.

### [Examples]

### «Overview»

Fig. 1 illustrates an appearance that an anti-skid device S for tires (referred simply to as "anti-skid device S") as one example of the present invention is attached to a tire T for large-sized cars. The anti-skid device S comprises three elementary units 1, 2 and 3. The elementary units 1, 2 and 3, which have the same form, are connected with one another in connectable and disconnectable manner at the outside of the tire T (paper front side of Fig. 1) as the side of the decorative surface of a wheel (not shown). Among them, one elementary unit 1 will hereinafter be described also with reference to Fig. 2, which is an enlarged view thereof.

### «Elementary units»

The elementary unit 1 comprises a first main body 11, a second main body 12, inside connectors 13 (131, 132 and 133), outside connectors 14 (141, 142, 143 and 144), inside abutting members 15 (151 and 152), outside abutting members 16 (161 and 162), inside contact members 17 (171 and 172), and outside contact members 18 (181 and 182).

The first main body 11 comprises an inside front extending portion 111, a first U-shaped portion 112, and an outside rear extending portion 113. The first U-shaped portion 112 specifically comprises an inside extending part 112a, a crossing part 112b, and an outside extending part 112c.

The inside extending part 112a extends along the inside sidewall part of the tire T in the radial-increase direction thereof. The crossing part 112b merges into the inside extending part 112a so as to be gently curved outward with about 90 degrees from the inside extending part 112a, and crosses the tread part of the tire T. The crossing part 112b is inserted in a rotary spring 112r, which may be a coil spring and can rotate around the crossing part 112b. The outside extending part 112c is gently curved with about 90 degrees from the crossing part 112b to extend along the outside sidewall part in the radial-decrease direction thereof.

The inside front extending portion 111 merges into the end of the inside extending part 112a of the first U-shaped portion 112 so as to be gently curved to the frontward circumferential direction with about 90 degrees, and extends along the inside sidewall part. The outside rear extending portion 113 merges into the end of the outside extending part 112c of the first U-shaped portion 112 so as to be gently curved to the rearward circumferential direction with about 90 degrees, and extends along the outside sidewall part.

The second main body 12 comprises an inside rear extending portion 121, a second U-shaped portion 122, and an outside front extending portion 123. The second U-shaped portion 122 specifically comprises an inside extending part 122a, a crossing part 122b, and an outside extending part 122c.

The inside extending part 122a extends along the inside sidewall part of the tire T in the radial-increase direction thereof. The crossing part 122b merges into the inside extending part 122a so as to be gently curved outward with about 90 degrees from the inside extending part 122a, and crosses the tread part of the tire T. The crossing part 122b is also inserted in a rotary spring 122r, which may be a coil spring and can rotate around the crossing part 122b. The outside extending part 122c is gently curved with about 90 degrees from the crossing part 122b to extend along the outside sidewall part in the radial-decrease direction thereof.

The inside rear extending portion 121 merges into the end of the inside extending part 122a of the second U-shaped portion 122 so as to be gently curved to the rearward circumferential direction with about 90 degrees, and extends along the inside sidewall part. The outside front extending portion 123 merges into the end of the outside extending part 122c of the second U-shaped portion 122 so as to be gently curved to the frontward circumferential direction with about 90 degrees, and extends along the outside sidewall part.

A (first) inside front connector 131 is provided pivotally at the end of the inside front extending portion 111 of the first U-shaped portion 112. A (second) inside rear connector 132 is provided pivotally at the end of the inside rear extending portion 121 of the second U-shaped portion 122. The inside front connector 131 and the inside rear connector 132 are connected with each other by means of a leaf chain 133 so that each pivotal motion can be possible along the inside sidewall part.

A (first) outside rear connector 141 is provided pivotally at the end of the outside rear extending portion 113 of the first U-shaped portion 112. A (second) outside front connector 142 is provided pivotally at the end of the outside front extending portion 123 of the second U-shaped portion 122. The outside rear connector 141 is connected with a female connector 244 of the elementary unit 2 via a male connector 143 which is provided pivotally at the rear-end portion of the outside rear connector 141 to allow easy connection and disconnection. The outside front connector 142 is connected with a male connector 344 of the elementary unit 3 via a female connector 144 which is provided pivotally at the front-end portion of the outside front connector 142 to allow easy connection and disconnection.

The inside front extending portion 111 of the first U-shaped portion 112 is inserted in a first inside abutting member 151 formed of hard rubber in a tubular shape so that the first inside abutting member 151 can rotate on the inside front extending portion 111. The inside rear extending portion 121 of the second U-shaped portion 122 is inserted in a second inside abutting member 152 formed of hard rubber in a tubular shape so that the second inside abutting member 152 can rotate on the inside rear extending portion 121. The outside rear extending portion 113 of the first U-shaped portion 112 is inserted in a first outside abutting member 161 formed of hard rubber in a tubular shape so that the first outside abutting member 161 can rotate on the outside rear extending portion 113. The outside front extending portion 123 of the second U-shaped portion 122 is inserted in a second outside abutting member 162 formed of hard rubber in a tubular shape so that the second outside abutting member 162 can rotate on the outside front extending portion 123. Inside abutting members 15 and outside abutting members 16 comprising them (referred collectively to as "abutting members 15 and 16") have the same properties and the same form.

The inside front connector 131 of the first U-shaped portion 112 is inserted in a first inside contact member 171 formed of hard rubber in a tubular shape so that the first inside contact member 171 can rotate on the inside front connector 131. The inside rear connector 132 of the second U-shaped portion 122 is inserted in a second inside contact member 172 formed of hard rubber in a tubular shape so that the second inside contact member 172 can rotate on the inside rear connector 132. The outside rear connector 141 of the first U-shaped portion 112 is inserted in a first outside contact member 181 formed of hard rubber in a tubular shape so that the first outside contact member 181 can rotate on the outside rear connector 141. The outside front connector 142 of the second U-shaped portion 122 is inserted in a second outside contact member 182 formed of hard rubber in a tubular shape so that the second outside contact member 182 can rotate on the outside front connector 142.

Inside contact members 17 and outside contact members 18 comprising them (referred collectively to as "contact members 17 and 18") have the same properties and the same form. Note, however, that the contact members 17 and 18 have a slightly thinner thickness than those of the previously-described abutting members 15 and 16. This causes the abutting members 15 and 16 to mainly contact the inside and outside sidewall parts of the tire T while the contact members 17 and 18 may subsidiarily contact the inside and outside sidewall parts.

### «Contact members and connectors»

An appearance that the contact member 181 is attached to the outside rear connector 141 is shown in Fig. 3 or Fig. 4 as an enlarged view. The contents described herein apply to the relationship between other contact members 171, 172 and 182 and other connectors 131, 132 and 142.

The outside rear connector 141 comprises two connecting plates 141 a and 141b and pivotal axes 141c and 141d that connect both end portions of the connecting plates 141a and 141b. At the frontward side of the connecting plates 141 a and 141b, the end portion of the outside rear extending portion 113 is interposed and held therebetween so as to be capable of pivotal motion. At the rearward side of the connecting plates 141a and 141b, the end portion of the male connector 143 is interposed and held therebetween so as to be capable of pivotal motion.

Fig. 3 illustrates a case where only the connecting plate 141a of the outside rear connector 141 is inserted in the first outside contact member 181 so that the first outside contact member 181 can rotate on the connecting plate 141a. Fig. 4, on the other hand, illustrates a case where the connecting plates 141a and 141b of the outside rear connector 141 are inserted in the first outside contact member 181 so that the first outside contact member 181 covers entirely the outer circumference of the connecting plates 141 a and 141 b.

In any of these cases, the first outside abutting member 161 constantly contacts the outside sidewall part Ts of the tire T with a strong force, but the first outside contact member 181 may timely contact the outside sidewall part Ts with a moderate force. In such a manner, the first outside contact member 181 prevents the outside rear connector 141 from directly contacting the outside sidewall part Ts and the decorative surface of the wheel. In addition, the first outside contact member 181 assists the first outside abutting member 161 to contribute to stable holding of the outside rear connector 141, and therefore of the anti-skid device S, to the tire T. Note that the first outside contact member 181 needs not constantly contact the outside sidewall part Ts, and any situation can be acceptable such that the first outside contact member 181 may timely contact the outside sidewall part Ts.

### [Reference Signs List]

- S: Anti-skid device for tires
- 1: Elementary unit
- 11: First main body
- 12: Second main body
- 141: (First) outside rear connector
- 142: (Second) outside front connector
- 181: First outside contact member
- 182: Second outside contact member

## Claims

1. An anti-skid device for tires, the anti-skid device comprising two or more elementary units, each of the two or more elementary units comprising:
a first main body comprising a first U-shaped portion located from an inside sidewall part of a tire fitted therein with a wheel for vehicles to an outside sidewall part of the tire across a tread part of the tire, an inside front extending portion merging into the first U-shaped portion at the inside sidewall part side and extending in a frontward circumferential direction of the tire, and an outside rear extending portion merging into the first U-shaped portion at the outside sidewall part side and extending in a rearward circumferential direction of the tire;
a first inside front connector provided pivotally at the inside front extending portion of the first main body;
a first outside rear connector provided pivotally at the outside rear extending portion of the first main body;
a second main body located at a frontward circumferential direction side of the first main body, the second main body comprising a second U-shaped portion located from the inside sidewall part to the outside sidewall part across the tread part, an inside rear extending portion merging into the second U-shaped portion at the inside sidewall part side and extending in a rearward circumferential direction of the tire, and an outside front extending portion merging into the second U-shaped portion at the outside sidewall part side and extending in a frontward circumferential direction of the tire;
a second inside rear connector provided pivotally at the inside rear extending portion of the second main body; and
a second outside front connector provided pivotally at the outside front extending portion of the second main body,
the first inside front connector and the second inside rear connector being connected with each other to form each of the two or more elementary units,
each of the two or more elementary units further comprising:
a first outside contact member covering at least a part of the first outside rear connector while being capable of contacting the outside sidewall part; and
a second outside contact member covering at least a part of the second outside front connector while being capable of contacting the outside sidewall part.

2. The anti-skid device for tires as recited in claim 1, wherein
the first outside contact member is held to be rotatable on the first outside rear connector,
and
the second outside contact member is held to be rotatable on the second outside front connector.

3. The anti-skid device for tires as recited in claim 1, wherein
each of the two or more elementary units further comprises:
a first inside contact member covering at least a part of the first inside front connector while being capable of contacting the inside sidewall part; and
a second inside contact member covering at least a part of the second inside rear connector while being capable of contacting the inside sidewall part.

4. The anti-skid device for tires as recited in claim 3, wherein
the first inside contact member is held to be rotatable on the first inside front connector,
and
the second inside contact member is held to be rotatable on the second inside rear connector.

5. The anti-skid device for tires as recited in claim 1, wherein
the inside front extending portion of the first main body is provided with a first inside abutting member abutting the inside sidewall part, the outside rear extending portion of the first main body is provided with a first outside abutting member abutting the outside sidewall part, the inside rear extending portion of the second main body is provided with a second inside abutting member abutting the inside sidewall part, and the outside front extending portion of the second main body is provided with a second outside abutting member abutting the outside sidewall part.
